# FASCICULE DE BREVET EUROPEEN

(11) **EP 2 053 735 B1**
(45) Date de publication et mention de la délivrance du brevet: **05.06.2019**
(21) Numéro de dépôt: 08305400.7
(22) Date de dépôt: 15.07.2008
(51) Int. Cl.: H02P 23/00, H02P 1/40, E06B 9/68, H02P 23/24

(54) **Inverseur comportant une fonction d'outil de réglage pour volet roulant, et procédé de réglage**
Umschalter, der eine Regulierungswerkzeugfunktion für Rollos umfasst, und entsprechendes Regulierungsverfahren
Inverter comprising an adjustment tool function for a roller shutter and adjustment method

(30) Priorité: 13.07.2007 FR 0756493
(43) Date de publication de la demande: 29.04.2009
(73) Titulaire: Deprat Jean SA, 59115 Leers (FR)
(72) Inventeur: CASTELL, Mathias, 59320 HALLENNES LEZ HAUBOURDIN (FR); KIMPE Florent, 59150 WATTRELOS (FR)
(74) Mandataire: Balesta, Pierre

(56) Documents cités:
- EP-A- 0 667 440
- EP-A- 0 822 315
- EP-A- 1 160 415
- EP-A- 1 626 154

## Description

La présente invention concerne un dispositif inverseur du type interrupteur, trouvant son application dans le domaine des volets roulants, notamment pour la commande électrique des moteurs de volets roulants. Ce dispositif sera notamment mis en oeuvre par les fabricants d'appareillages électriques, et trouvera son application pour les installateurs de volets roulants.

Les volets roulants sont agencés au niveau des ouvertures de portes et fenêtres des bâtiments pour assurer l'ouverture et la fermeture des dites ouvertures. Les volets roulants se composent notamment d'un tambour sur lequel s'enroule ou se déroule un tablier assurant l'obturation de l'ouverture. Le volet roulant comprend également des moyens de commande permettant d'actionner le tambour suivant deux sens de rotation, l'un permettant d'enrouler le tablier sur le tambour, et l'autre de le dérouler. Ces moyens de commande sont soit du type manuel, consistant en une manivelle qui permet d'actionner le tambour suivant les deux sens de rotation, soit du type électrique, consistant notamment en un moteur électrique à deux sens de rotation qui agit sur le tambour pour le faire tourner dans un sens ou dans l'autre.

Concernant les moyens de commande du type électrique, la commande du moteur est assurée au moyen d'un dispositif inverseur, du type interrupteur inverseur, qui permet d'alimenter le moteur électrique de manière à le faire tourner suivant l'un ou l'autre des sens de rotation. Pour cela, le dispositif inverseur comprend un mécanisme de commande qui comprend au moins deux positions exclusives dont une permet d'actionner le moteur suivant un sens de rotation et l'autre permet de l'actionner suivant le sens de rotation opposé. Ces deux positions exclusives ont pour fonction d'éviter tout risque de mise en court-circuit du moteur électrique en mode de fonctionnement normal.

Par ailleurs, les volets roulants sont généralement munis d'une carte électronique dédiée à la gestion de l'ensemble des fonctions du moteur ainsi qu'à son alimentation. Cette carte électronique permet notamment de s'affranchir de la mise en court-circuit du moteur, indépendamment de l'inverseur. Par ailleurs, elle permet également de gérer certaines fonctions du moteur, notamment le réglage des positions fin de course montée et descente du tablier du volet roulant selon lesquelles l'alimentation électrique du moteur se coupe. Le réglage des positions fin de course est obtenu par la mise en court-circuit de la carte électronique lorsque le tablier atteint sa position basse et sa position haute, cette mise en court-circuit permettant de mémoriser lesdites positions sur la carte et d'agir en conséquence sur le moteur électrique pour couper son alimentation. Cette mise en court-circuit est assurée au moyen d'un outil de réglage qui se connecte sur la carte électronique pour assurer ladite mise en court-circuit.

On connaît du document EP 1 160 415 un dispositif qui, dans un premier mode de réalisation (voir notamment la figure 3 de ce document), prévoit un mode programmation ou de réglage. Précisément, le contrôleur 24 entre dans ce mode de programmation lorsque les deux lignes PHD et PHM sont validées simultanément. Cette validation simultanée est obtenue, par un installateur, en reliant les deux lignes entre elles à l'aide d'un bornier ou d'un cavalier prévu spécifiquement à cet effet à l'intérieur du boîtier 10, et en appuyant sur l'une des touches 12 et 14 de la commande pour relier les deux lignes simultanément à la phase.

Un des problèmes posés par un tel dispositif est que le cavalier ou bornier utilisé pour relier les deux lignes entre elles peut facilement être perdu.

En outre, un tel dispositif ne permet pas de réaliser de façon simple un réglage fin et précis. En effet, avec ce dispositif, il faut tout d'abord amener le moteur dans la position de fin de course souhaitée, couper l'alimentation du moteur, puis placer le cavalier ou le bornier. Si, après ces opérations, l'on veut affiner le réglage, en faisant tourner le moteur dans un sens ou dans l'autre par petits coups, il faut tout d'abord retirer le cavalier.

La présente invention a pour objet de résoudre les problèmes précités parmi d'autres problèmes.

En particulier, la présente invention a pour objet de supprimer l'utilisation d'un outil de réglage complémentaire pour effectuer la mémorisation des positions fin de courses montée et descente sur la carte électronique, et de faciliter le réglage tout en augmentant la précision de ce réglage.

La présente invention a donc pour objet, selon un premier aspect, un dispositif inverseur du type interrupteur, suivant la revendication 1, pour la commande électrique d'un moteur notamment de volet roulant.

Le dispositif comprend au moins un mécanisme de commande, qui est monté à l'intérieur d'un boîtier fermé et qui peut prendre au moins deux positions exclusives de commande dont l'une permet d'actionner le moteur suivant un sens de rotation et l'autre permet de l'actionner suivant le sens de rotation opposé.

Le mécanisme de commande est actionnable dans l'une ou l'autre des positions exclusives de commande par des premiers moyens d'actionnement accessibles de l'extérieur du boîtier.

Le mécanisme comprend des moyens de court-circuitage aptes à permettre l'actionnement du mécanisme de commande simultanément dans les deux positions exclusives de commande, et à générer un court-circuit en sorte de permettre la transmission à la commande électronique du moteur d'informations notamment de type réglage relatif aux fins de course.

De façon caractéristique, les moyens de court-circuitage sont actionnables par des seconds moyens d'actionnement, distincts des premiers moyens d'actionnement et intégrés de façon permanente au mécanisme de commande à l'intérieur du boîtier.

Ces moyens de court-circuitage permettent donc de contourner électriquement l'actionnement alternatif de la commande du moteur dans l'un et l'autre des deux sens de rotation.

Ainsi, le dispositif permet la transmission à la commande électronique du moteur, qui peut être une carte électronique, d'informations notamment de type réglage relatif aux fins de course (réglage des fins de course elles-mêmes, réglage de la sensibilité d'appui sur ces fins, de course, etc...).

Par ailleurs, grâce aux seconds moyens d'actionnement, intégrés de façon permanent au mécanisme, donc sans risque de perte, il est possible de procéder à la mise en court-circuit moteur tournant, et de procéder ensuite à un réglage fin, comme on le verra plus loin dans la présentation du procédé qui est un deuxième objet de l'invention.

Une telle conception du dispositif inverseur permet son utilisation en tant qu'outil de réglage de la position fin de courses montée et descente d'un moteur de volet roulant lors de la mise en court-circuit générée par le dispositif.

La mise en court-circuit du dispositif permet d'agir sur une carte électronique de gestion des fonctions du moteur de volet roulant.

Ainsi on supprime l'utilisation d'un outil de réglage complémentaire au dispositif inverseur connu, afin d'effectuer la mise en court-circuit de la carte électronique permettant la gestion des fonctions du moteur du volet roulant.

Dans une variante, les seconds moyens d'actionnement sont aussi des moyens d'arrêt et de remise en rotation du moteur lorsque le mécanisme de commande est préalablement actionné dans l'une ou l'autre des deux positions exclusives de commande.

Le mécanisme peut comprendre au moins une bascule. L'actionnement de la bascule dans l'une ou l'autre de ses deux positions permet d'actionner soit l'un soit l'autre des deux sens de rotation du moteur.

Les moyens de court-circuitage sont agencés pour contourner la bascule et permettre de fermer simultanément les deux lignes normalement fermées alternativement par la bascule, afin de générer un court-circuit.

Le boîtier peut être fermé par un cache notamment du type plastron. Les moyens d'actionnement sont alors dissimulés sous ledit cache.

De préférence, les moyens de court-circuitage comprennent un shunt, par exemple de type microswitch, actionnable par les seconds moyens d'actionnement, ces seconds moyens d'actionnement comprenant de préférence un bouton poussoir.

L'invention a également pour objet, selon un deuxième aspect, l'utilisation du dispositif inverseur suivant la revendication 7 tel que présenté ci-dessus, en tant qu'outil de réglage de la position fin de course montée/descente d'un moteur notamment de volet roulant.

Dans ce procédé, de façon caractéristique, lorsque le dispositif génère une mise en court-circuit, cette mise en court-circuit agit sur une carte électronique de gestion des fonctions du moteur.

De préférence, on utilise le dispositif de la façon suivante.

Tout d'abord, on actionne le moteur dans un des deux sens de rotation en plaçant le mécanisme de commande dans l'une ou l'autre des deux positions exclusives de commande, par l'intermédiaire des premiers moyens d'actionnement.

Ensuite, on met en oeuvre au moins une fois les trois étapes suivantes :
- on actionne, moteur tournant, les moyens de court-circuitage par l'intermédiaire des seconds moyens d'actionnement,
- on relâche les seconds moyens d'actionnement pour stopper la mise en court-circuit,
- on mémorise, de préférence automatiquement, dans la carte électronique la position courante en tant que première ou deuxième position de fin de course, par exemple fin de course haute ou basse.

De préférence, l'étape de mémorisation dans la carte électronique est réalisée automatiquement, à chaque incrément de la position, pendant que le moteur tourne, avant relâchement des seconds moyens d'activation.

Alternativement, ou en combinaison, l'étape de mémorisation dans la carte électronique est réalisée automatiquement, dès le relâchement des seconds moyens d'activation.

Ainsi, dans tous les cas, la position de fin de course mémorisée est la dernière position atteinte en mode court-circuité.

La présente invention sera mieux comprise à la lecture de la description qui va suivre, s'appuyant sur des figures parmi lesquelles :
- la figure 1 schématise une installation de volet roulant équipée d'un dispositif inverseur ;
- la figure 2 schématise un mode de conception particulier du dispositif inverseur ;

Le dispositif inverseur 1 selon l'invention est notamment du type interrupteur permettant la commande électrique d'un moteur 3 de volet roulant 5 agencé au niveau d'une ouverture de type porte ou fenêtre d'un bâtiment.

Le volet roulant 5 comprend notamment un tambour ou tube d'enroulement 7 sur lequel est enroulé un tablier 9 permettant l'obturation de l'ouverture du bâtiment. Ce tambour ou tube d'enroulement 7 est actionné en rotation au moyen du moteur 3 électrique disposant de deux sens de rotation, l'un permettant le déploiement du tablier 9, et l'autre son retrait.

Le volet roulant est équipé d'une carte électronique 11 dédiée à la gestion de l'ensemble des fonctions du moteur 3, notamment à son alimentation. Cette carte électronique 11 permet également de s'affranchir de la mise en court-circuit du moteur, indépendamment de l'inverseur. Elle permet par ailleurs d'effectuer le réglage de la position fin de courses du moteur 3 pour assurer l'arrêt de celui-ci lorsque le tablier 9 est complètement déployé, et lorsque le tablier 9 est complètement enroulé.

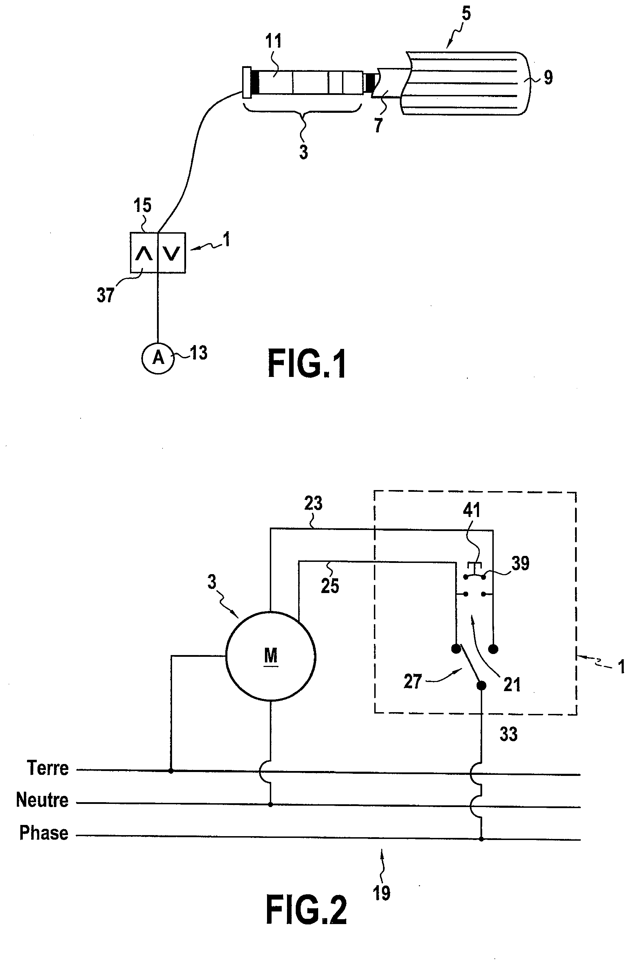

Ce réglage de la position fin de courses est assuré sur la carte électronique 11 par la mise en court-circuit de ladite carte électronique 11 lorsque les positions fin de courses sont atteintes. Cette carte électronique 11 est notamment insérée dans un boîtier électronique 11, illustré en figure 1, ce boîtier électronique 11 étant raccordé au dispositif inverseur 1 selon l'invention qui permet d'agir sur ladite carte électronique 11 pour inverser la commande du moteur 3 et ainsi inverser son sens de rotation.

Tel qu'illustré à la figure 2, de manière préférentielle, le boîtier 15 du dispositif 1 dispose d'une entrée 33 et de deux sorties 23 et 25, l'entrée et les deux sorties étant raccordées au moyen d'un câble conducteur sur le boîtier électronique 11.

Le dispositif inverseur 1 comprend un mécanisme de commande 19, schématisé sur la figure 2. Ce mécanisme de commande 19 dispose au moins de deux positions exclusives dont l'une permet d'actionner le moteur 3 suivant un sens de rotation et l'autre permet d'actionner le moteur 3 suivant l'autre sens de rotation, l'actionnement du moteur 3 se faisant par le biais de la carte électronique 11.

On entend par position exclusive le fait qu'une seule des deux sorties 23, 25 peut être raccordée sur l'entrée 33 lorsque le dispositif fonctionne normalement, à chaque sortie 23, 25 correspondant un sens de rotation du moteur 3.

Le mécanisme 19 comprend des moyens de court-circuitage 21 qui permettent de commander simultanément les deux positions. Cette commande simultanée des deux positions a pour but d'alimenter simultanément les deux sorties 23, 25 du dispositif inverseur 1, ce qui permet de générer un court-circuit au niveau du boîtier électronique 11. Ce court-circuit permet d'effectuer le réglage du moteur 3, et notamment de mémoriser les deux positions de fin de courses montée et descente du tablier 9 de volet roulant 5.

Tel qu'illustré sur la figure 2, le mécanisme 19 comprend au moins une bascule 27 agencée pour prendre deux positions, à savoir une position permettant d'agir sur la carte électronique (non représentée sur la figure 2) et d'actionner l'un des sens de rotation du moteur 3, et une position permettant d'agir sur la carte électronique (non représentée sur la figure 2) pour actionner l'autre sens de rotation du moteur 3.

Les moyens de court-circuitage 21 sont agencés sur le mécanisme 19 pour permettre de connecter l'entrée 33 simultanément sur les deux sorties 23, 25 pour générer un court-circuit au niveau de la carte électronique 11.

Selon le mode de réalisation particulier illustré sur la figure 2, le dispositif inverseur 1 comprend une entrée 33, notamment alimentée depuis le boîtier électronique 11 (non représenté à la figure 2).

Le dispositif inverseur 1 comprend également deux sorties 23, 25 qui sont raccordées sur le boîtier électronique 11 pour actionner l'un ou l'autre des sens de rotation du moteur 3.

Le dispositif 1 comprend une bascule 27 agencée entre l'entrée 33 et les deux sorties 23, 25.

Ainsi, on garantit qu'en mode de fonctionnement normal, la bascule ferme une seule des deux sorties 23 et 25, ce qui évite tout risque de court-circuit en mode normal d'utilisation.

Le mécanisme 19 selon ce mode de conception particulier illustré en figure 2, comprend un shunt 39 (qui peut être de type microswitch) agencé entre l'entrée 33 et les sorties 23, 25. Ce shunt 39 est actionné notamment au moyen d'un système de commande du type bouton poussoir 41 ou équivalent.

L'activation de ce shunt 39 permet ainsi de raccorder l'une des deux sorties 23, 25, ouverte par la bascule 27, avec l'entrée 33, en même temps que l'autre des deux sorties 23, 25, fermée par la bascule 27, est également raccordée sur cette entrée 33.

Ainsi on alimente simultanément les deux sorties 23, 25 raccordées toutes les deux sur l'entrée 33.

De manière préférentielle, selon le mode de conception particulier illustré à la figure 3, le shunt 39, et notamment le bouton 41 permettant d'actionner ledit shunt 39, sont dissimulés dans le dispositif pour éviter leur actionnement en mode de fonctionnement normal. Seuls les moyens d'actionnement 37 (non représentés à la figure 2) de la bascule 27 sont alors accessibles de l'extérieur tel qu'illustré sur la figure 1.

Pour cela, le dispositif inverseur 1 comprend notamment un cache par exemple du type plastron (non représenté) permettant de dissimuler le mécanisme 19 et le bouton 41 pour ne laisser apparaître que le bouton 37 de commande de la bascule 27.

Le bouton 41 permettant d'actionner le shunt 39, donc les moyens 21, est dissimulé sous ce plastron, ce qui le rend inaccessible depuis l'extérieur en mode de fonctionnement normal.

Ce bouton poussoir 41, en tant que seconds moyens d'actionnement 41 pour la mise en court-circuit, constitue aussi des moyens d'arrêt et de remise en rotation du moteur 3 lorsque le mécanisme de commande 19 est préalablement actionné dans l'une ou l'autre des deux positions exclusives de commande, c'est-à-dire lorsque le moteur 3 est préalablement mis en rotation dans l'un ou l'autre de ses deux sens de rotation.

Autrement dit, après la mise en rotation du moteur 3, par l'intermédiaire des premiers moyens d'actionnement 37, si l'on entre dans le mode court-circuité en appuyant sur le bouton poussoir 41, moteur 3 tournant, on peut ensuite commander l'arrêt et le redémarrage de la rotation du moteur 3 en relâchant puis en rappuyant sur le bouton poussoir 41.

Ces moyens de court-circuitage 21 sur le dispositif inverseur 1 selon l'invention, permettant de générer un court-circuit au niveau du boîtier électronique 11 du volet roulant 5, sont notamment utilisés en tant qu'outil de réglage du volet roulant 5.

En effet, la mise en court-circuit de la carte électronique 11 qui permet de gérer les différentes fonctions du moteur 3, notamment l'inversion du sens de rotation du moteur pour la montée et la descente du tablier 9 du volet roulant 5, permet également de gérer la position de fin de courses montée et descente en interrompant l'alimentation dudit moteur 3. Ce réglage de la position de fin de courses est assuré par la mise en court-circuit de la carte électronique 11 lorsque le tablier 9 atteint une position extrême haute ou basse.

Ainsi, le dispositif permet d'effectuer le réglage de ces deux positions ; le dispositif inverseur est actionné en mode de fonctionnement normal pour agir sur la carte électronique et permettre, par exemple, la descente du tablier jusqu'à sa position extrême basse où ledit tablier est déployé et obture l'ouverture du bâtiment.

Pour ce faire, le mécanisme de commande 19 est placé dans la position exclusive de commande correspondant à la descente, par l'intermédiaire des premiers moyens d'actionnement 37.

Ensuite, on actionne, moteur 3 tournant, les moyens de court-circuitage 21 par l'intermédiaire des seconds moyens d'actionnement.

On entre ainsi en mode réglage. En laissant le mécanisme de commande 19 dans la position exclusive de commande précitée, si l'on relâche les seconds moyens d'actionnement 41, le moteur 3 s'arrête. On peut ainsi vérifier si la bonne position (position extrême basse) est atteinte.

Si cette bonne position est atteinte, le processus est terminé, sous réserve de mémoriser cette position dans la carte électronique 11, ce qui est réalisé de préférence automatiquement, soit au relâchement des seconds moyens d'activation 41, soit en cours de rotation du moteur 3 en mode court-circuité à chaque incrément de la position, soit les deux.

Si la bonne position n'est pas atteinte, ou actionne de nouveau les seconds moyens d'activation 41, ce qui a pour effet de remettre en rotation le moteur 3, puis on arrête et l'on vérifie la position. On peut recommencer autant de fois que nécessaire, pour affiner le réglage.

S'il est nécessaire de faire remonter le tablier (parce que l'on est allé trop bas), il suffit, avant de remettre en court-circuit par l'intermédiaire des seconds moyens d'actionnement 41, de placer le mécanisme de commande 19 dans la position exclusive de commande correspondant à la montée, par l'intermédiaire des premiers moyens d'actionnement 37, puis de recommencer le processus décrit ci-dessus.

Dans tous les cas, la position extrême mémorisée, ici la position basse, est la dernière position atteinte en mode court-circuité.

On recommence ensuite le processus pour le réglage de la position de fin de course montée ou fin de course haute.

Le dispositif inverseur 1 selon l'invention pourra être agencé sur le mur intérieur du bâtiment, en apparent ou en encastré. Il pourra également être directement intégré dans les menuiseries des portes ou fenêtres, notamment au niveau du chambranle.

D'autres mises en oeuvre du dispositif inverseur peuvent être envisagées sans sortir du cadre de la présente invention tel que défini par les revendications.

## Revendications

1. Dispositif inverseur (1) du type interrupteur, pour la commande électrique d'un moteur (3) notamment de volet roulant (5), comprenant au moins un mécanisme de commande (19) monté à l'intérieur d'un boîtier fermé (15) et pouvant prendre au moins deux positions exclusives de commande dont l'une permet d'actionner le moteur (3) suivant un sens de rotation et l'autre permet de l'actionner suivant le sens de rotation opposé, ledit mécanisme de commande (19) étant actionnable dans l'une ou l'autre desdites positions exclusives de commande par des premiers moyens d'actionnement (37) accessibles de l'extérieur dudit boîtier (15), ce dit mécanisme de commande (19) comprenant des moyens de court-circuitage (21) aptes à permettre l'actionnement dudit mécanisme de commande (19) simultanément dans les deux dites positions exclusives de commande et à générer un court-circuit en sorte de permettre la transmission à la commande électronique (11) du moteur (3) d'informations notamment de type réglage relatif aux fins de course,
**caractérisé en ce que** lesdits moyens de court-circuitage (21) sont actionnables, moteur tournant, par des seconds moyens d'actionnement (41), distincts desdits premiers moyens d'actionnement (37) et intégrés de façon permanente audit mécanisme de commande (19) à l'intérieur dudit boîtier (15).

2. Dispositif inverseur (1) selon la revendication 1, **caractérisé en ce que** les seconds moyens d'actionnement (41) sont aussi des moyens d'arrêt et de remise en rotation du moteur (3) lorsque le mécanisme de commande (19) est préalablement actionné dans l'une ou l'autre des deux positions exclusives de commande.

3. Dispositif inverseur (1) selon l'une quelconque des revendications 1 et 2, **caractérisé en ce que** le mécanisme (19) comprend au moins une bascule (27) à au moins deux positions, la première de ces deux positions permettant d'actionner l'un des deux sens de rotation du moteur (3), et la deuxième de ces deux positions permettant d'actionner l'autre sens de rotation, les moyens de court-circuitage (21) étant agencés pour court-circuiter ladite bascule (27) et permettre d'actionner simultanément les deux sens de rotation.

4. Dispositif inverseur (1) selon la revendication 3, **caractérisé en ce qu'**il comprend une entrée (33) et deux sorties (23, 25), la bascule (27) étant agencée entre l'entrée (33) et les deux sorties (23, 25), les moyens de court-circuitage (21) étant constitués par un shunt (39) permettant de connecter l'entrée (33) sur l'une des deux sorties (23, 25) en position fermée par la bascule (27), et simultanément sur l'autre des deux sortie (23, 25) ouverte par la bascule (27).

5. Dispositif inverseur (1) selon l'une des revendications 1 à 4, **caractérisé en ce que** le boîtier (15) est fermé par un cache notamment du type plastron, et **en ce que** les seconds moyens d'actionnement (41) sont dissimulés sous ledit cache.

6. Dispositif inverseur (1) selon l'une des revendications 1 à 5, **caractérisé en ce que** les moyens de court-circuitage (21) comprennent un shunt (39) de préférence de type microswitch actionnable par les seconds moyens d'actionnement (41), ces dits seconds moyens d'actionnement (41) comprenant de préférence un bouton poussoir (41).

7. Utilisation du dispositif inverseur (1) selon l'une des revendications 1 à 6 en tant qu'outil de réglage de la position fin de course montée/descente d'un moteur (3) notamment de volet roulant (5), **caractérisée en ce que**:
a- on actionne le moteur (3) dans un des deux sens de rotation en plaçant le mécanisme de commande (19) dans l'une ou l'autre des deux positions exclusives de commande, par l'intermédiaire des premiers moyens d'actionnement (37),
b- on met en oeuvre au moins une fois les trois étapes suivantes :
b1 - on actionne, moteur (3) tournant, les moyens de court-circuitage (21) par l'intermédiaire des seconds moyens d'actionnement (41), de manière à générer une mise en court-circuit agissant sur une carte électronique (11) de gestion des fonctions du moteur (3),
b2 - on relâche les seconds moyens d'actionnement (41) pour stopper la mise en court-circuit,
b3 - on mémorise, de préférence automatiquement, dans la carte électronique (11) la position courante en tant que première ou deuxième position de fin de course, par exemple fin de course haute ou basse

8. Utilisation du dispositif inverseur (1) selon la revendication 7, **caractérisée en ce que** l'étape b3 est réalisée automatiquement, à chaque incrément de la position, pendant que le moteur (3) tourne, avant la réalisation de l'étape b2.

9. Utilisation du dispositif inverseur (1) selon l'une quelconque des revendications 7 et 8, **caractérisée en ce que** l'étape b3 est réalisée automatiquement, dès que l'étape b2 est réalisée.

## Patentansprüche

1. Umschaltvorrichtung (1) vom Typ Wendeschalter zur elektrischen Steuerung eines Motors (3), insbesondere von einem Rollo (5), mit mindestens einem Steuermechanismus (19), der im Inneren eines geschlossenen Gehäuses (15) angebracht ist und mindestens zwei exklusive Steuerpositionen einnehmen kann, von denen die eine das Betätigen des Motors (3) in einer Drehrichtung und die andere das Betätigen in der entgegengesetzten Drehrichtung ermöglicht, wobei der Steuermechanismus (19) in der einen oder anderen der exklusiven Steuerpositionen durch erste Betätigungsmittel (37) betätigbar ist, die von außerhalb des Gehäuses (15) zugänglich sind, wobei dieser Steuermechanismus (19) Kurzschlussmittel (21) umfasst, die in der Lage sind, die Betätigung des Steuermechanismus (19) gleichzeitig in den beiden exklusiven Steuerpositionen zu ermöglichen und einen Kurzschluss zu erzeugen, um die Übertragung von Informationen, insbesondere solche vom Typ Regulierung bezüglich der Endlagen, an die elektronische Steuerung (11) des Motors (3) zu ermöglichen,
**dadurch gekennzeichnet, dass** die Kurzschlussmittel (21) bei laufendem Motor durch zweite Betätigungsmittel (41) betätigbar sind, die sich von den ersten Betätigungsmitteln (37) unterscheiden und dauerhaft in den Steuermechanismus (19) innerhalb des Gehäuses (15) integriert sind.

2. Umschaltvorrichtung (1) nach Anspruch 1, **dadurch gekennzeichnet, dass** die zweiten Betätigungsmittel (41) auch Mittel zum Stoppen und Wiederinbetriebnehmen des Motors (3) darstellen, wenn der Steuermechanismus (19) zuvor in der einen oder anderen der beiden exklusiven Steuerpositionen betrieben wird.

3. Umschaltvorrichtung (1) nach einem der Ansprüche 1 und 2, **dadurch gekennzeichnet, dass** der Mechanismus (19) mindestens eine Kippschaltung (27) mit mindestens zwei Positionen umfasst, wobei die erste dieser beiden Positionen es ermöglicht, eine der beiden Drehrichtungen des Motors (3) zu betätigen, und die zweite dieser beiden Positionen es ermöglicht, die andere Drehrichtung zu betätigen, wobei die Kurzschlussmittel (21) dazu ausgelegt sind, die Kippschaltung (27) kurzzuschließen und das gleichzeitige Betätigen beider Drehrichtungen zu ermöglichen.

4. Umschaltvorrichtung (1) nach Anspruch 3, **dadurch gekennzeichnet, dass** sie einen Eingang (33) und zwei Ausgänge (23, 25) umfasst, wobei die Kippschaltung (27) zwischen dem Eingang (33) und den beiden Ausgängen (23, 25) angeordnet ist und die Kurzschlussmittel (21) aus einem Shunt (39) bestehen, der es ermöglicht, den Eingang (33) mit dem einen der beiden Ausgänge (23, 25), der sich durch die Kippschaltung (27) in der geschlossenen Position befindet, und gleichzeitig mit dem anderen der beiden Ausgänge (23, 25), der durch die Kippschaltung (27) geöffnet wird, zu verbinden.

5. Umschaltvorrichtung (1) nach einem der Ansprüche 1 bis 4, **dadurch gekennzeichnet, dass** das Gehäuse (15) durch eine Abdeckung, insbesondere vom Typ Frontplatte, geschlossen ist und dass die zweiten Betätigungsmittel (41) unter dieser Abdeckung verborgen sind.

6. Umschaltvorrichtung (1) nach einem der Ansprüche 1 bis 5, **dadurch gekennzeichnet, dass** die Kurzschlussmittel (21) einen Shunt (39) vorzugsweise vom Mikroschaltertyp umfassen, der durch die zweiten Betätigungsmittel (41) betätigbar ist, wobei die zweiten Betätigungsmittel (41) vorzugsweise einen Druckknopf (41) umfassen.

7. Anwendung der Umschaltvorrichtung (1) nach einem der Ansprüche 1 bis 6 als Werkzeug zur Regulierung der oberen/unteren Endlage eines Motors (3), insbesondere von einem Rollo (5), **dadurch gekennzeichnet, dass**:
a- der Motor (3) in einer der beiden Drehrichtungen betätigt wird, indem der Steuermechanismus (19) über die ersten Betätigungsmittel (37) in die eine oder andere der beiden exklusiven Steuerpositionen gebracht wird,
b- die folgenden drei Schritte mindestens einmal durchgeführt werden:
b1- die Kurzschlussmittel (21) werden bei laufendem Motor (3) mittels der zweiten Betätigungsmittel (41) betätigt, sodass ein Kurzschluss erzeugt wird, der auf eine Elektronikplatine (11) zur Verwaltung der Funktionen des Motors (3) wirkt,
b2- die zweiten Betätigungsmittel (41) werden freigegeben, um den Kurzschluss zu stoppen,
b3- die aktuelle Position wird vorzugsweise automatisch in der Elektronikplatine (11) als erste oder zweite Endlagenposition, zum Beispiel obere oder untere Endlage, gespeichert.

8. Anwendung der Umschaltvorrichtung (1) nach Anspruch 7, **dadurch gekennzeichnet, dass** Schritt b3 bei jedem Inkrement der Position automatisch ausgeführt wird, während der Motor (3) läuft, bevor Schritt b2 ausgeführt wird.

9. Anwendung der Umschaltvorrichtung (1) nach einem der Ansprüche 7 und 8, **dadurch gekennzeichnet, dass** Schritt b3 automatisch ausgeführt wird, sobald Schritt b2 ausgeführt wird.

## Claims

1. An inverter device (1) of the switch type, for the electric control of a motor (3) in particular a roller shutter (5) motor, comprising at least one control mechanism (19) mounted inside a closed casing (15) and which can take at least two exclusive control positions, one of which allows actuating the motor (3) in one direction of rotation and the other allows actuating it in the opposite direction of rotation, said control mechanism (19) is able to be actuated in either of said exclusive control positions by first actuating means (37) accessible from outside said casing (15), this said control mechanism (19) comprising short-circuiting means (21) able to allow actuation of said control mechanism (19) simultaneously in both said exclusive control positions and to generate a short-circuit in order to allow transmission, to the motor (3) electronic control (11), of information in particular of the type adjustment relating to the ends of travel,
**characterized in that** said short-circuiting means (21) are able to be actuated, motor running, by second actuating means (41), distinct from said first actuating means (37) and permanently integrated to said control mechanism (19) within said casing (15).

2. The inverter device (1) according to claim 1, **characterized in that** the second actuating means (41) are also means for stopping and rotating the motor (3) when the control mechanism (19) is previously actuated in either of the two exclusive control positions.

3. The inverter device (1) according to any one of claims 1 and 2, **characterized in that** the mechanism (19) comprises at least one flip-flop (27) having at least two positions, the first of these two positions allowing to actuate one of the two directions of rotation of the motor (3), and the second of these two positions allowing to actuate the other direction of rotation, the short-circuiting means (21) being arranged to short-circuit said flip-flop (27) and allow actuating simultaneously both directions of rotation.

4. The inverter device (1) according to claim 3, **characterized in that** it comprises an inlet (33) and two outlets (23, 25), the flip-flop (27) being arranged between the inlet (33) and the two outlets (23, 25), the short-circuiting means (21) being constituted by a shunt (39) allowing to connect the inlet (33) to one of the two outlets (23, 25) in the closed position by the flip-flop (27), and simultaneously to the other of the two outlets (23, 25) opened by the flip-flop (27).

5. The inverter device (1) according to any of claims 1 to 4, **characterized in that** the casing (15) is closed by a cover in particular of the plastron type, and **in that** the second actuating means (41) are concealed beneath said cover.

6. The inverter device (1) according to any of claims 1 to 5, **characterized in that** the short-circuiting means (21) comprise a shunt (39) preferably of the micro-switch type, able to be actuated by the second actuating means (41), these said second actuating means (41) preferably comprising a push button (41).

7. A use of the inverter device (1) according to any of claims 1 to 6 as a tool for adjusting the upward/downward end-of-travel position of a motor (3) in particular a roller shutter (5) motor, **characterized in that**:
a- the motor (3) is actuated in one of the two directions of rotation by placing the control mechanism (19) in either of the two exclusive control positions, via the first actuating means (37),
b- the three following steps are implemented at least once:
b1- actuating, motor (3) running, the short-circuiting means (21) via the second actuating means (41) so as to generate a short-circuiting acting on an electronic board (11) for managing the functions of the motor (3),
b2- releasing the second actuating means (41) to stop the short-circuiting,
b3- storing, preferably automatically, in the electronic board (11), the current position as first or second end-of-travel position, for example high or low end-of-travel.

8. The use of the inverter device (1) according to claim 7, **characterized in that** step b3 is carried out automatically, at each increment of the position, while the motor (3) rotates, before carrying out step b2.

9. The use of the inverter device (1) according to any one of claims 7 and 8, **characterized in that** step b3 is carried out automatically, as soon as step b2 is carried out.
